# EUROPEAN PATENT APPLICATION

(11) **EP 4 835 786 A1**
(43) Date of publication of application: **04.11.2026**
(21) Application number: 25173626.0
(22) Date of filing: 30.04.2025
(51) Int. Cl.: G06Q 30/01, G06N 20/00, G06Q 30/0202, G06Q 30/0201

(54) **SYSTEM FOR ADJUSTING PRODUCT PARAMETERS**

(71) Applicant: Nagravision Sàrl, 1033 Cheseaux-sur-Lausanne (CH)
(72) Inventor: BERKES, Pietro, 1033 Cheseaux-sur-Lausanne (CH); SUTER, Samuel, 1033 Cheseaux-sur-Lausanne (CH); SNAPIR, Boris, 1033 Cheseaux-sur-Lausanne (CH)
(74) Representative: Meissner Bolte Partnerschaft mbB

(57) **Abstract**

Provided is a system for automatically selecting actions for adjusting product performance. The system comprises: a data input module configured to receive real-time data and context data relating to a product; a feature extractor configured to extract features from the real-time data; a prediction module comprising a machine-learning model, the machine-learning model configured to process the features and the context data to generate a predicted consequence of executing one or more candidate actions, a decision module configured to select one of the candidate actions based on the predicted consequences, and an implementation module configured to execute the selected candidate action and monitor a detected consequence of executing the selected candidate action, wherein the prediction module is configured to update the machine learning model based on the selected candidate action and the detected consequence.

## Description

### FIELD OF THE INVENTION

The present invention relates to a system and a computer-implemented method for adjusting product parameters, a computer program product, and a computer readable medium.

### BACKGROUND

Automatic systems (e.g., automatic product vendors) for selling and adjusting product offerings such as broadband or subscription deals can be used to interface with customers and update product parameters based on the interaction. For example, product parameters such as variant, operating settings, price, length of a contract, etc. may be adjusted to meet user demands and increase product revenue.

Traditional systems such as chatbots can select an action from a series of predetermined actions for adjusting product parameters. However, such systems are typically static and unable to adapt to changing scenarios as a result of changing physical, technological, or financial environments. For example, some automatic product vendors may be configured to offer customers products based on a predetermined set of offers. However, these offers cannot be tailored to specific scenarios or adapted according to real-time input data such as interactions with the customers leading to underperformance of the product.

Some systems may use machine learning algorithms to select actions based on historical data. For example, Current Next Best Action (NBA) systems make decisions based on collaborative filtering (e.g., "similar people bought...") or classifiers (e.g., "probability this subscriber will buy..."). However, such systems operate offline and do not integrate with real-time data such as live conversation data. Therefore the systems cannot adapt to handle changeable scenarios and new products or product parameters effectively. Additionally, these systems lack an understanding of their impact on product performance, such as churn or revenue, and require large amounts of historical data for training the machine learning model. As a result, existing systems are not accurate or reliable in the face of changing circumstances and may require large amounts of historical data.

Accordingly, there is a desire for an improved decision-making system which can analyse changeable sources of information and make decisions for adjusting products with less input data than traditional models. The present invention has been devised in light of the above considerations.

### SUMMARY OF THE INVENTION

Broadly, the present disclosure relates to a system for automatically selecting actions for improving product performance in which the selected actions are executed and then the consequences of executing those actions are monitored to continuously update the system for selecting further actions.

In a first aspect there is provided a system for adjusting product operating parameters, the system comprising: a data input module configured to receive real-time data associated with a product and context data relating to parameters of the product; a feature extractor configured to extract features from the real-time data; a prediction module comprising a machine-learning model configured to process the features and the context data to generate a predicted consequence of executing one or more candidate actions for adjusting the product operating parameters, a decision module configured to select one of the candidate actions based on the predicted consequences, an implementation module configured to execute the selected candidate action and monitor a detected result of executing the selected candidate action, wherein the prediction module is configured to update the machine learning model based on the selected candidate action and the detected result.

In this way, the machine learning model is able to learn and adapt to changing scenarios and contexts without requiring large historical datasets thus providing more accurate predictions and overall higher performing products. This reduces the resource requirements (memory, computing resources of the system. As a result the system has lower data requirements and is more readily adaptable than traditional systems.

The system may be a decision-making system for automatically selecting actions for adjusting product parameters to improve a product performance. For example, the system may be an automatic product vendor or automatic customer service agent configured to select and provide product offers or marketing offers to a user as part of the adjusting of product parameters. The system may update the product offers based on a predicted product performance. The product performance may be indicated by financial measures such as revenue or churn.

The product may be a service or device for use by a user such as a broadband package. The actions for adjusting product parameters may include one or more adjustments to the service or device. For example, adjustable product parameters may include product variant, operating parameters, price, length of a contract, etc.

The real-time data may be variable data relating to the product such as conversation data about the product (e.g., from an online chatbot) and/or status monitoring data relating to the product. For example, if the product is related to a network, such as a broadband package, status monitoring data may indicate data on network interruptions, uptime/downtime, or similar metrics.

The context data may be static data relating to a user of the product and/or static features of the product. For example, the context data may include one or more of: product type, user details such as tenure, demographic, or past usage of products.

The user may be a subscriber or consumer intended to use or buy a product. The user may be a source of conversation data. For example, the user may be a participant in a conversation about the product with a chatbot.

The system may be a distributed computer system. For example, each module of the system may be a server, processor, or database, in communication with one or more of the other modules via a network. However, two or more modules of the system may be implemented by a single server, processor, or database. The system may comprise one of more of: a database of context data, wherein the context data may relate to a plurality of users and/or products; a remote server for storing the machine learning model; and a chatbot server for conducting a conversation and collecting the real-time data. The chatbot server may be in communication with one or more client devices. Thus, conversation data may be collected from a user via a client device and the network.

The machine learning model may be a central machine-learning model associated with a product type. The data input module may be configured to receive real-time data and context data associated with a plurality of products (e.g., instances of a product) within that product type, and use the real-time data and context data from each product to determine an action and update the central machine-learning model.

A product type may be any configuration of a product as described above, including, for example, e.g. promotional discounts in exchange for a commitment of a limited time period, e.g. 12 months.

The machine learning model may be updated using data from a plurality of products or users. Accordingly, the prediction module may be configured to continuously update the machine learning model based on a plurality of selected candidate actions and detected consequences over time.

The machine learning model may be a reinforcement learning model. For example, the reinforcement leaning model may be based on a neural network, which maps context data and features extracted by the feature extractor to predicted consequences of executing one or more candidate actions for adjusting the product operating parameters. Alternatively to the neural network, a logistic regression model or a LightGBM model may be used, or a combination of the aforementioned models.

In general, the decision module is configured to select one of the candidate actions based on the predicted consequences.

The decision module may be further configured to reject each of (e.g., all of) the one or more candidate actions based on the predicted consequences. In this case, the implementation module may be configured to monitor a detected consequence of not executing any of the one or more candidate actions when they are all rejected. As a result, the machine-learning model can gain more information about the decision space for informing future predictions.

In particular, the decision module may be configured to implement the following steps:
(1) a prediction step, comprising predicting the consequences of each candidate action (for example, in terms of churn uplift and revenue uplift associated with presenting a specific offer);
(2) a decision step, comprising deciding whether a) a candidate action is to be selected or b) all candidate actions are to be rejected, and, in case a), to select the candidate action; and
(3) an update step, comprising updating the machine learning model based on the decision by the decision module and a detected result of the decision.

Further details of steps (1) to (3) are given below.

### (1) Prediction step

The machine-learning model may be configured to generate a predicted consequence of executing the one or more candidate actions across a range of values for a configurable setting of each of the candidate actions. The decision module may be configured to select the selected candidate action and a value for the configurable setting for the selected candidate action based on the predicted consequences. For example, the configurable setting may be a direction or magnitude of an adjustment to a product parameter.

Each of the candidate actions may include one or more adjustments to a parameter of the product.

The predicted consequence of executing a candidate action may be an estimated impact of executing the candidate action in terms of product performance. In some examples, the respective performance may comprise both the predicted change in customer churn and predicted change in product revenue. The decision module may be configured to combine the predicted customer churn and predicted product revenue using a configurable weighting value (α) to generate a respective overall consequence value for that candidate action. For example, the overall consequence value for a specific candidate action may be given by:$VALUE = REVENUEUPLIFT - α * CHURNUPLIFT * CURRENTREVENUE$

The decision module may then select the selected candidate action based on its respective overall consequence value.

The configurable weighting value (α) parameter may allow an operator of the system to adjust the weight given to churn reduction relative to revenue increase. This parameter may be updated to align with shifting priorities of the operator

### (2) Decision step

The decision module may be configured to select one of the candidate actions, based on the predicted consequences, using a stochastic selection process to explore a prediction space of the machine-learning model. In this way, the machine-learning model may be trained using a trial and error process. The stochastic selection process may include statistically selecting candidate actions predicted to result in the best product performance as well as selecting alternative candidate actions to explore the prediction space of the machine-learning model. The use of stochastic sampling can therefore help to balance rapid learning and impact maximization of the model.

For example, the stochastic selection process may comprise using Thompson sampling to select the candidate action. Thompson sampling may be understood to be a sampling algorithm in which a candidate action may be chosen that maximizes an expected reward (i.e., the predicted product performance) with respect to a randomly drawn belief.

Alternatively or additionally, other stochastic selection methods may also be used to select the candidate action such as simple random sampling, systematic sampling, stratified sampling, cluster sampling, quota sampling, Epsilon-Greedy, Boltzmann sampling, Upper Confidence Bound (UCB), and Bootstrap Thompson Sampling (BTS).

The decision module may be configured to favour an exploration factor of the stochastic selection process (e.g., over an exploitation factor). Accordingly, the candidate action may be more likely to be selected randomly than according to its predicted performance owing to the increased emphasis on the exploration factor. The decision module may then increase a weighting of an exploitation factor of the stochastic selection process. The exploration factor may be understood to refer to a trade-off between gathering new information (exploration) for training the machine-learning model and using existing knowledge to achieve a specific outcome (exploitation), the specific outcome being the optimising of product performance. By increasing a weighting of the exploitation factor over time, a candidate action which is selected according to its predicted performance may be more likely to be selected as the exploitation factor increases. Accordingly, the machine-learning model may quickly learn the characteristics of the decision space in the face of little available data before it begins prioritising actions which are predicted to result in the best performance.

As a result, the system may have lower resource and data requirements than existing decision-making systems which are trained in a traditional manner.

The decision module may be configured to tune the exploitation factor differently for different actions or products. Furthermore, the decision module might be configured to estimate the uncertainty about the performance of a certain action, and adapt the exploitation factor based on that estimate for each action individually.

### (3) Update step

The implementation module is configured to execute the selected candidate action and to monitor a detected result (or consequence) of executing the selected candidate action (or of not executing any candidate action),

The monitored consequence of executing the candidate action may be a measured change in performance of the product in response to executing the selected candidate action, which involves making the one or more adjustments, or not executing a candidate action. For example, the monitored consequence may be a financial performance measurement of the product.

The respective measured change in performance may comprise a measured change in number of users and/or product uptake in response to making the one or more adjustments. For example, the measured change may be measured by monitoring a change in customer churn (e.g., incremental churn, or churn lift) and/or in product revenue (e.g., revenue lift) in response to the decision step, i.e., making (or not making) the one or more adjustments in accordance with the decision of the decision module.

Updating the machine learning model based on the monitored consequence may therefore enable the optimization of financial parameters in a dynamic way which can respond to changing financial objectives. In addition, updating the machine learning according to reinforcement learning has the advantage that the model can be adapted efficiently.

The prediction module may be configured to continuously update the machine learning model based on a plurality of selected candidate actions and detected consequences over time. In particular, if the machine learning model is a reinforcement learning model as described above, the update process may be implemented by a reinforcement learning agent. The machine learning model is updated through minimizing a loss function that quantifies the difference between the predicted outcomes (i.e., the expected product performance resulting from executing the respective candidate action) and the actual outcome. Minimization can be achieved by using any appropriate optimization function, for example the gradient descent method.

The machine learning model may be configured to estimate the outcome (e.g., the uplift, i.e., the impact on churn and revenue) directly, e.g. using a "transformed outcome" approach, or estimate the impact of not presenting an action and presenting the action separately, e.g. in a "T-learner" approach.

The real-time data may be received from a client device associated with the product. For example, the real-time data may be received from a client device associated with a user of the product. For example, the real-time data may include conversation data relating the product, and the features may include conversation features.

For example, the conversation data may be received from a user of the product via an automatic chat-bot. The conversation data may also received from the interaction of a product user with a voice-to-voice system, or a similar interactive system.

The conversation features include any one or more of: intent, tone, and sentiment features. In particular, the features may include an evaluation of the overall tone and sentiment, the presence of different topics in the conversation (e.g., technical issues, willingness to lower the cost, request for additional services, etc), etc.

The conversation features may be in the form of a vector comprising a numerical value for each feature. The feature extractor may include a large language model (LLM) which is configured to extract the conversation features. The LLM can be an open source model like LLaMA or Qwen, or a commercial model like Claude Sonnet or ChatGPT. For example, the LLM may be seeded with a prompt to evaluate a conversation so far with a user and provide a numerical score for one or more conversation features. The numerical scores may then be combined to form a feature vector.

The candidate actions may include a plurality of different candidate actions. The prediction module may comprise a plurality of machine-learning models each configured to generate a respective predicted consequence for a respective one of the candidate actions. The predicted consequences may then be compared to select an action (and configurable settings for that action) to execute and to update the respective machine learning model (e.g., using reinforcement learning).

In an additional aspect there is provided a computer-implemented method for selecting actions for improving a product performance, the method comprising: i) receiving real-time data associated with a product and context data relating to parameters of the product; ii) extracting features from the real-time data; iii) generating, using a machine-learning model configured to process the features and the context data, a predicted consequence of performing one or more candidate actions, iv) selecting one of the candidate actions based on the predicted consequences, v) executing the selected candidate action, vi) monitoring a detected consequence of performing the selected candidate action, and vii) updating the machine-learning model based on the selected candidate action and the detected consequence.

The computer-implemented method may comprise: repeating steps i to vi to generate and execute a plurality of selected candidate actions and periodically update the machine-learning model based on the plurality of selected candidate actions and detected consequences.

In the respective steps iv) to vii) described above, the method may comprise:
iv') alternatively, rejecting all of the candidate actions based on the predicted consequences,
vi') alternatively, monitoring a detected consequence of not performing any one of the selected candidate actions, and
vii') alternatively, updating the machine-learning model based on the detected consequence.

This allows the method to consider the impact of not executing a candidate action, e.g., not making an adjustment or not offering a product, in order to be able to compute certain metrics of performance, like for example the churn uplift. This is related to the stochastic decision making: the system might decide not to offer a candidate action to be able to evaluate the impact of not executing the candidate action.

In an additional aspect there is provided a computer readable medium comprising instructions which, when executed by at least one processor, cause the at least one processor to carry out one or more steps of the method according to the preceding aspect.

Additional aspects may relate to systems configured to execute the computer-implemented method of aspect described herein. Specifically, the system may comprise at least one processor which is configured to execute one or more steps of the respective computer-implemented methods of any aspect described herein.

Additional aspects may provide a computer program comprising instructions which, when the program is executed by at least one processor, cause the at least one processor to carry out one or more steps of a computer-implemented method of any aspect described herein. Further aspects may provide a computer-readable storage medium, having stored thereon, the computer program of the previous aspects.

The invention includes the combination of the aspects and preferred features described except where such a combination is clearly impermissible or expressly avoided.

In particular, features disclosed in connection with the system of the present invention can be applied to the method of the present invention, and vice versa.

### SUMMARY OF THE FIGURES

Embodiments and experiments illustrating the principles of the invention will now be discussed with reference to the accompanying figures in which:
- **FIG. 1** shows a diagram of a system for monitoring and adjusting products;
- **FIG. 2** shows a diagram of a system for adjusting product parameters;
- **FIG. 3** shows a flow diagram for a method of adjusting product parameters;
- **FIG. 4** shows a flow diagram of an example method for predicting consequences of adjusting product parameters;
- **FIG. 5** shows a flow diagram of an example method for selecting a product adjustment;
- **FIG. 6** shows a high-level flow diagram of an example method for updating a prediction model;
- **FIG. 7** shows a diagram of the system components involved in updating the prediction model through reinforcement learning; and
- **FIG. 8** shows a diagram illustrating the reinforcement learning training performance over time.

### DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

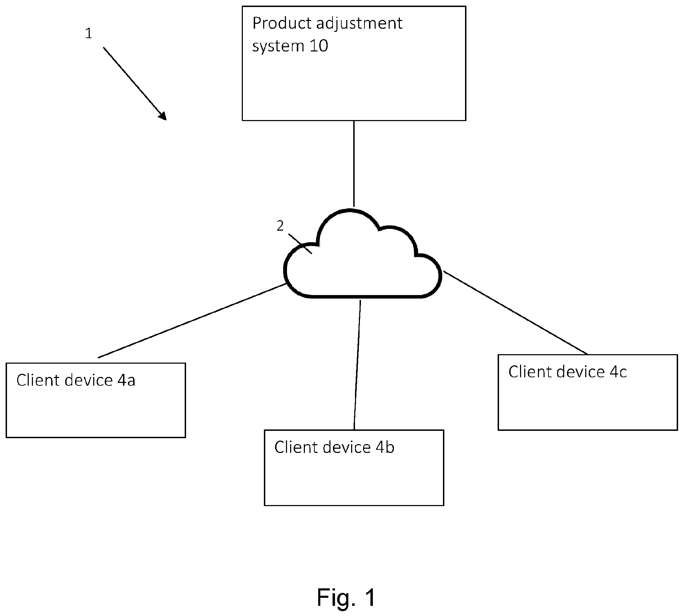

FIG. 1 shows a diagram of a system 1 for monitoring and adjusting products. For example, the products may be a service for use by one or more users or clients in the field of telecommunication (e.g., broadband deals, internet bundles), banking (e.g., credit card deals or investment packages), insurance (with products having multiple parameters such as out-of-pocket expense limits), or similar fields.

The system 1 comprises a product adjustment system 10 for receiving information about a user and a product, and providing a product offering to the user based on the information. The product adjustment system 10 is configured to communicate with users via a plurality of client devices 4a-c via a network 2 (e.g., a cloud). For example, the product adjustment system 10 may be located on one or more central servers accessible via the cloud.

A user may communicate with the product adjustment system 10 via a client device 4a to negotiate and accept or reject a product offering with the product adjustment system 10. The product adjustment system 10 is configured to receive real-time conversation data from the client devices 4n and generate a product offering based on the real-time conversation data according to the methods discussed herein.

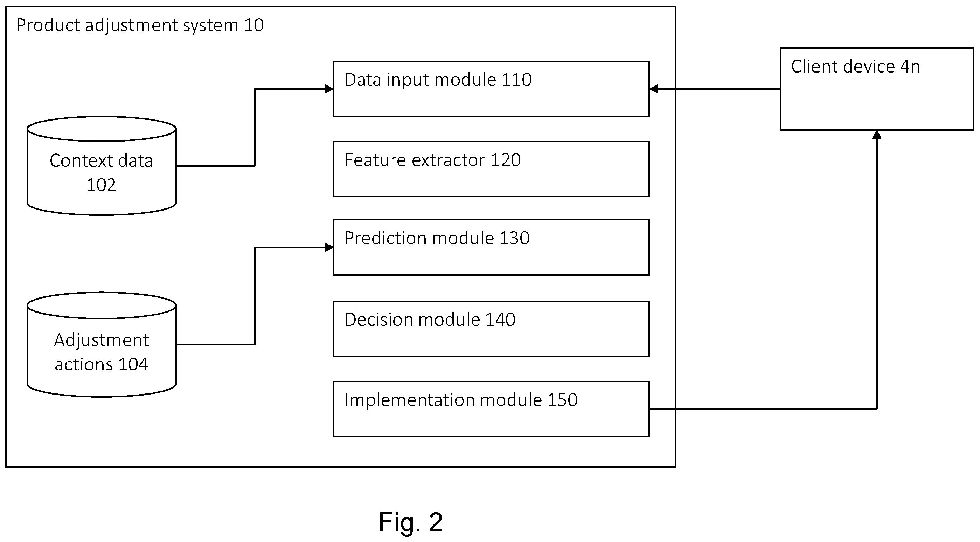

FIG. 2 shows a diagram of the product adjustment system 10. The product adjustment system 10 comprises a data input module 110, a feature extractor 120, a prediction module 130, a decision module 140, and an implementation module 150.

The data input module 110 is configured to receive real-time data associated with a product (e.g., a subscription to a broadband service) from a client device 4n and context data 102 relating to parameters of the product. For example, the real-time data may be continuously updating conversation data from a conversation between a user of the client device 4n and a system operator or a chatbot. The context data is received from a database 102 and may contain settings of the product (e.g., type, cost, size, etc) and data relating to the user such as tenure (previous time using the product), demographic, or previous product use.

The feature extractor 120 is configured to extract features from the real-time data. For example, when the real-time data includes conversation data, the feature extractor 120 may prompt an LLM to extract numerical conversation features from the real-time data indicating aspects such as tone, word or term frequency, intent, or sentiment of the conversation. The extracted features may be continually updated as the conversation progresses and different product offerings and adjustments are presented to the user.

The prediction module 130 comprises a machine-learning model configured to process the extracted features and the context data 102 to generate a predicted consequence of executing one or more candidate actions 104 for adjusting the product operating parameters. The candidate actions 104 are selected from a plurality of available product adjustment actions stored in an actions database. As discussed in more detail below, the consequences may include a probability of customer churn, and/or expected revenue as a result of executing each of the candidate actions 104. The machine-learning model is a reinforcement learning model configured to predict the outcomes of the candidate actions 104 in view of the real-time data.

The decision module 140 is configured to select one of the candidate actions 104 based on the predicted consequences. The selected candidate action is selected using a stochastic sampling process to maximise predicted performance whilst also training the machine learning model by exploring a decision space of the model. For example, the candidate action predicted to result in the highest performance (e.g., the lowest probability of customer churn, highest expected revenue, or a combination of both) may be selected. In other examples, a different candidate action may be selected (potentially having a lower predicted performance) to explore the prediction space of the machine learning model for updating the machine learning model using reinforcement learning.

The implementation module 150 is configured to execute the selected candidate action and then monitor a detected result of executing the selected candidate action. For example, executing the action may comprise offering a product or a product adjustment (such as a particular broadband deal) to the user via a communication with the client device 4n. The detected result may then include an outcome such as whether the customer accepts the offer or not and the resulting effect on revenue and customer churn. The detected result may be a monitored consequence of many product offerings. For example, a change in revenue or churn may be sampled daily or weekly after a plurality of candidate actions have been executed with respect to a plurality of users.

The prediction module 130 is configured to update the machine learning model based on the selected candidate action and the detected result using reinforcement learning. Accordingly, the machine learning model can increase its accuracy over time thus improving the system performance in automatic decision-making whilst also adapting to changing user sentiments and operator priorities.

Herein, the term "module" is used to refer to a functional module which is configured or adapted to execute a particular function. The modules may be implemented in hardware (i.e. they may be separate physical components within a computer), in software (i.e. they may represent separate sections of code, which when executed by at least one processor, cause at least one processor to perform a particular function), or in a combination of both. Two or more modules may be implemented by the same hardware component, software component, or combination thereof.

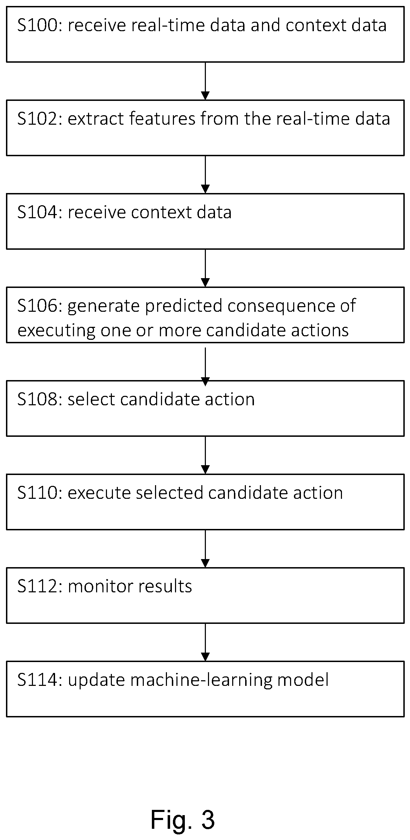

FIG. 3 shows a flow diagram for a method for adjusting product parameters. The method may be implemented using the system 10 of FIG. 2.

In step S100, the data input module 110 receives real-time data associated with a product. Next, in step S102, the feature extractor 120 extracts features from the real-time data. In step S104, the data input module 110 retrieves context data relating to parameters of the product and the user (e.g., from the database 102). In step S106, the prediction module 130 uses a machine-learning model (e.g., the reinforcement learning model described in the embodiment of Figure 3) to process the features and the context data to generate a predicted consequence of executing one or more candidate actions for adjusting the product operating parameters. In step S108, the decision module 140 selects one of the candidate actions based on the predicted consequences using a stochastic sampling process, and then in step S110, the implementation module 150 executes the selected candidate action. In S112, the implementation module monitors a detected result of executing the selected candidate action (and optionally, one or more additional executed actions in relation to one or more additional users). Finally, in step S114, the prediction module 130 updates the machine-learning model, in particular the reinforcement learning model, based on the selected candidate action and the detected result. Over time, the stochasticity of the selection process used by the selection module can be reduced, for example, according to Thompson sampling or another sampling algorithm, to prioritise product performance (e.g., maximising revenue and reducing churn) over continues training of the model.

In the flow diagram of Figure 3, the step of receiving real-time data (S100) is performed before the step of receiving context data (S104). However, the step of receiving context data (S104) can be performed before the step of receiving context data (S100) as well.

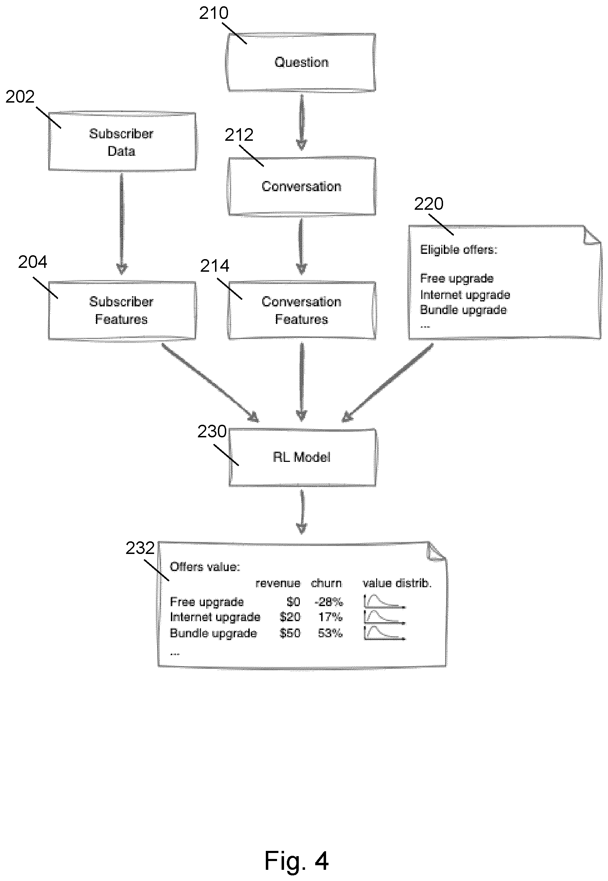

FIG. 4 shows a flow diagram of a process for predicting consequences of adjusting a product offering for an internet bundle. First, subscriber data 202 relating to a user or customer is collected (e.g., as the context data). For example, the subscriber data 202 may include tenure, activated products, current price, and previous interactions. The subscriber data 202 is then processed into standardized subscriber features 204 (e.g., in a numerical form).

Additionally, a chatbot or the subscriber sends a question 210 which may be replied to, to form a continuously updating conversation 212. A feature extractor continuously extracts, and updates conversation features 236 from the conversation 212 so far after each customer query and bot reply. The conversation features may include features such as intent, tone, and sentiment. Meanwhile, a prediction module retrieves a set of eligible offers 220 which form a set of candidate actions for adjusting the internet bundle which may be offered to the subscriber.

Next, the subscriber features 204, the conversation features 214, and the eligible offers 220, are provided to the reinforcement learning (RL) model 230 which is used to generate a value 232 of each eligible offer by predicting an expected change in revenue and churn associated with each eligible offer (if it were to be presented to the subscriber). If multiple offers are available, the RL algorithm computes the value of each one based on the same subscriber 204 and conversation 214 features.

A final decision on whether to present an offer to the subscriber is determined based on a single numerical value (an overall consequence value), for example, calculated as follows: $VALUE = REVENUE UPLIFT - α * CHURN UPLIFT * CURRENT REVENUE$

The alpha (α) parameter is a configurable weighting value that allows an operator of the system to adjust the weight given to churn reduction or augmentation relative to revenue increase or decrease (as illustrated by the value distribution curves in FIG. 4). This parameter can be changed at any time to align with shifting operator priorities. In particular, the parameter can be defined as a function depending on time and/or other parameters.

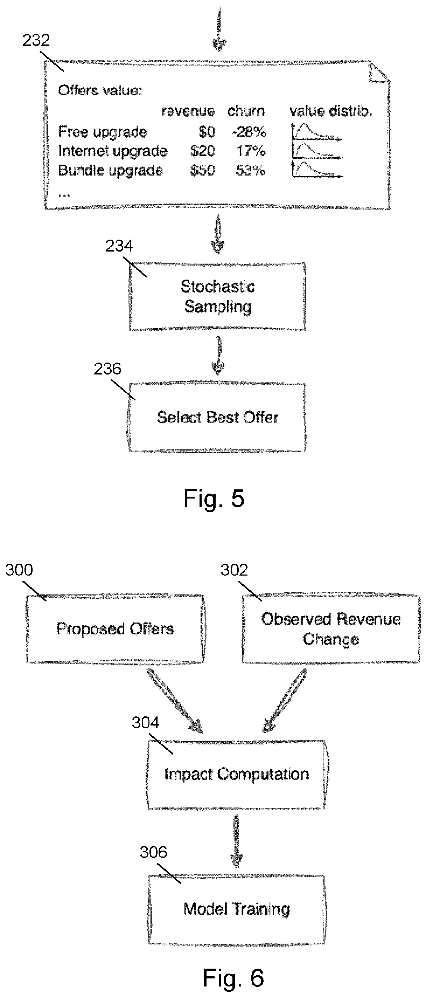

FIG. 5 shows a flow diagram of a process for selecting an action based on the predicted consequences 232 determined in the process of FIG. 4. Based on each offer's predicted value 232, the offer is either presented to the subscriber or not. This decision is not deterministic but stochastic, wherein stochastic sampling 234 is used to select a "best offer" 236 for presenting to the subscriber. The "best offer" is therefore selected based on the predicted value but also with a degree of randomness in order to collect more data for training the machine learning model, in particular the RL model. The use of stochastic sampling 234 allows churn and revenue data to be collected which compares similar situations (wherein the subscriber 204 and conversation 214 features are similar) wherein an offer was presented to the subscriber and situations where it was not.

FIG. 6 shows a high-level flow diagram of a process for updating the prediction model based on the selected offer. First, a plurality of selected offers, referred to as "proposed offers" 300 in FIG. 6, are presented to respective users who may accept or reject the offers leading to an observed change in revenue 302 (and churn). The outcome of the decision to present or not present an offer is measured by the change in revenue and account status (churn or not) at the end of a predetermined time period, such as the end of the day or week etc that the offer was made in. An impact value is then computed at step 304 for each offer that was made based on the observed change in revenue and churn. Finally, at step 306, the machine learning model, in particular the RL model is updated using the computed impact value.

The stochasticity of the selection algorithm for performing the reinforcement learning can be reduced over time as more information becomes available, to balance rapid learning and impact maximization (exploration vs. exploitation problem). For example, the stochasticity is reduced following the Thompson sampling algorithm. In this way, the system is automatically updated with the outcome of every interaction and adapts its recommendation strategy as more data becomes available. As a result, the automated decision making algorithm can become more effective at automatically adjusting and presenting product offerings to users.

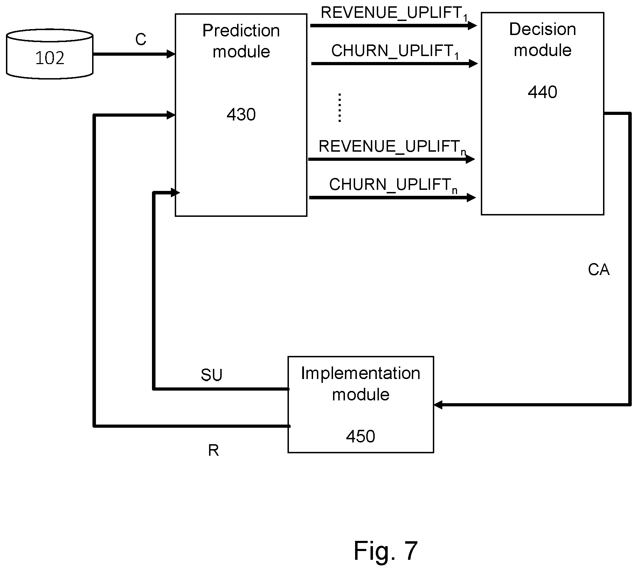

FIG. 7 shows a diagram of the system components involved in updating the prediction model through reinforcement learning.

The prediction module 430 comprises a machine learning model and a reinforcement learning (RL) agent. The machine learning model is configured to predict an expected consequence of executing one or more candidate actions (e.g., presenting one or more offers to a client), based on context data 102 (such as customer information) and, optionally, features extracted from real-time data (e.g., conversational features extracted from a user interaction with a chatbot). For this purpose, the machine learning module is configured to compute, for each candidate action i=1,...,n, the values REVENUE_UPLIFTᵢ and CHURN_UPLIFT_i, indicating the predicted uplift of revenue and churn associated with candidate action i, respectively. The prediction module 430 is configured to output these values to the decision module 440.

The decision module 440 is configured to evaluate the expected product performance by computing the value ${v}_{i} = REVENUE {UPLIFT}_{i} - α * CHURN {UPLIFT}_{i} * CURRENT {REVENUE}_{i}$ for each candidate action i=1,...,n. Moreover, the decision module 440 is configured to either select one of the candidate actions 1,...,n or to reject all of the candidate actions. This decision process is a stochastic sampling process based on the values v₁, ..., v_{n,}.

The implementation module 450 is configured to receive the selected candidate action CA (if existing) from the implementation module 450 and to execute the selected candidate action (e.g., presenting the selected offer to the client).

The implementation module 450 is further configured to detect a result of executing the selected candidate action CA (i.e., an outcome) due to the client's reaction to the execution of the candidate action. The client's reaction may be derived from an interaction between the client and a chatbot, a voice-to-voice system or similar interactive systems.

Therefore, the implementation module 450 is configured to provide a reward signal R, which is indicative of the outcome of the decision of the decision module 440 to execute one or none of the candidate actions, to the prediction module 430. In particular, the reward signal may indicate a change in churn and/or revenue. Furthermore, the implementation module 450 is configured to provide status update data SU to the prediction module 430, wherein the status update data SU can be conversational features derived from the client's interaction with a chatbot, a voice-to-voice system or similar interactive systems. The conversational features may be extracted by a feature extractor such as an LLM.

Based on the reward signal R, the context data 102, and, optionally, the status update data SU, the prediction module 430 is configured to update the parameters of the machine learning model. For this purpose, the RL agent of the prediction module 430 may perform minimizing a loss function, which quantifies the difference between the predicted outcomes (i.e., the values v1, ..., vn) and the actual outcome (feedback) according to the reward signal.

The reinforcement learning process described above (including action selection, detecting a reaction to the selected action with a corresponding reward, updating the model based on the reward) may be performed continuously over time.

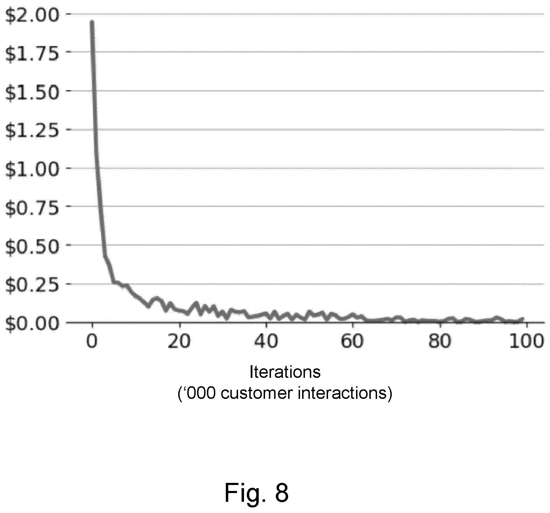

FIG. 8 shows an example of reinforcement learning training performance over time.

The vertical axis indicates the regret, which is the difference between the expected reward of the theoretically optimal action, and the expected reward of the action selected by the reinforcement learning model. The plot shows the average regret over a given iteration.

The diagram shows that through reinforcement learning, the machine learning model can be optimized efficiently, yielding a regret of less than 0.25$ in less than 10 iterations. This demonstrates that the machine learning model can be optimized without requiring large historical datasets, which reduces the resource requirements (memory, computing resources) of the system. As a result, the system has lower data requirements and is more readily adaptable than traditional systems.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A system (1) adjusting product operating parameters, the system (1) comprising:
a data input module (110) configured to receive real-time data associated with a product and context data (102) relating to parameters of the product;
a feature extractor (120) configured to extract features from the real-time data;
a prediction module (130) comprising a machine learning model configured to process the features and the context data (102) to generate a predicted consequence of executing one or more candidate actions for adjusting the product operating parameters,
a decision module (140) configured to select one of the candidate actions based on the predicted consequences,
an implementation module (150) configured to execute the selected candidate action and monitor a detected result of executing the selected candidate action,
wherein the prediction module (150) is configured to update the machine learning model based on the selected candidate action and the detected result.

2. The system (1) of claim 1, wherein the machine learning model is a central machine learning model associated with a product type and the data input module (110) is configured to receive real-time data and context data (102) associated with a plurality of products within that product type.

3. The system (1) according to any one of claims 1 or 2, wherein the machine learning model is a reinforcement learning model, in particular based on a neural network.

4. The system (1) according to any preceding claim, in particular claim 3, wherein the prediction module (130) is configured to continuously update the machine learning model, in particular through a reinforcement learning agent, based on a plurality of selected candidate actions and detected consequences over time.

5. The system (1) according to any preceding claim, wherein the decision module (140) is configured to select one of the candidate actions using a stochastic selection process to explore a prediction space of the machine learning model.

6. The system (1) according to any preceding claim, wherein the decision module (140) is further configured to reject each of one or more candidate actions based on the predicted consequences, and
the implementation module (150) is configured to monitor the detected consequence of not executing any of the one or more candidate actions.

7. The system (1) according to any preceding claim, wherein the machine-learning model is configured to generate predicted consequences of executing the one or more candidate actions across a range of values for a configurable setting for each of the candidate actions;
wherein the decision module (140) is configured to select the selected candidate action and a value for the configurable setting for the selected candidate action based on the predicted consequences.

8. The system (1) according to any preceding claim, wherein each of the candidate actions include one or more adjustments to a parameter of the product, wherein the monitored consequence of executing the candidate action is a measured change in respective performance of the product in response to making the one or more adjustments.

9. The system (1) according to any preceding claim, in particular claim 8, wherein the respective performance comprises a measured change in customer churn and/or in product revenue in response to making the one or more adjustments.

10. The system (1) according to any preceding claim, in particular claim 7, wherein the respective performance comprises predicted changes in customer churn and product revenue, wherein the decision module (140) is configured to:
combine the predicted customer churn and predicted product revenue using a configurable weighting value to generate a respective overall consequence value for that candidate action, and
select the selected candidate action based on the respective overall consequence value.

11. The system (1) according to any preceding claim, wherein the real-time data includes conversation data relating the product, and the features include conversation features, in particular any one or more of: intent, tone, and sentiment features.

12. The system (1) according to any preceding claim, wherein the candidate actions include a plurality of different candidate actions, and the prediction module (130) comprises a plurality of machine learning models each configured to generate a respective predicted consequence for a respective one of the candidate actions.

13. A computer-implemented method for selecting actions for improving a product performance, the method comprising:
i) receiving real-time data associated with a product and context data (102) relating to parameters of the product;
ii) extracting features from the real-time data;
iii) generating, using a machine-learning model configured to process the features and the context data, a predicted consequence of performing one or more candidate actions,
iv) selecting one of the candidate actions based on the predicted consequences,
v) executing the selected candidate action,
vi) monitoring a detected consequence of performing the selected candidate action, and
vii) updating the machine-learning model based on the selected candidate action and the detected consequence.

14. The computer-implemented method of claim 13, wherein the method comprises:
repeating steps i to vi to generate and execute a plurality of selected candidate actions and periodically update the machine-learning model based on the plurality of selected candidate actions and detected consequences, in particular through reinforcement learning.

15. A computer readable medium comprising instructions which, when executed by at least one processor, cause the at least one processor to carry out one or more steps of the method according to any one of claims 13 or 14.
